# EUROPEAN PATENT SPECIFICATION

(11) **EP 2 517 845 B1**
(45) Date of publication and mention of the grant of the patent: **15.07.2015**
(21) Application number: 12163430.7
(22) Date of filing: 05.04.2012
(51) Int. Cl.: B26D 3/28, B26D 5/02, B23B 5/16, B23D 21/10

(54) **Pipe scraping tool, etc**
Schälwerkzeug für Rohre
Outil de raclage de tuyaux, etc.

(30) Priority: 27.04.2011 GB 201107030
(43) Date of publication of application: 31.10.2012
(73) Proprietor: Caldervale Technology Limited, West Yorkshire WF12 9DB (GB); Myers, Paul Nicholas, Wakefield, West Yorkshire WF4 4NJ (GB); Farrar, Steven Garfield, Dewsbury, West Yorkshire WF12 7BT (GB); Lilley, Gordon Leslie, Leyburn, West Yorkshire DL8 5HB (GB)
(72) Inventor: Myers, Paul Nicholas, Netherton,Wakefield, West Yorkshire WF4 4NJ (GB); Farrar, Steven Garfield, Dewsbury, West Yorkshire WF12 7BT (GB); Lilley, Gordon Leslie, Leyburn, West Yorkshire DL8 5HB (GB)
(74) Representative: Franks & Co Limited

(56) References cited:
- EP-A1- 0 427 453
- DE-A1- 10 328 150
- DE-U1- 29 516 513
- GB-A- 2 345 875
- US-A- 5 894 772

## Description

### Field of the Invention

This invention relates to a device for scraping, skimming or cutting the external periphery of a synthetic plastics pipe - typically of polyethylene - to a shallow depth <0.3mm, prior to the attachment of a saddle fitting to the convex, external periphery of a pipe by fusion welding.

### Background of the invention

Synthetic plastics pipes are used extensively by gas and water utilities. Apart from needing end-to-end connection usually by employing a sleeve, into opposite ends of which the ends of the pipes to be joined are inserted prior to fusion welding, there is also a requirement to attach a saddle fitting at a required distribution point for domestic, commercial or industrial premises.

It is well known that the surface of polyethylene pipes deteriorates by oxidation e.g. during outdoor storage, apart from possible damage during transportation and manhandling, and that good fusion welding practice requires the removal by scraping/skimming/cutting (all hereinafter referred to as "scraping") of a surface layer of the pipe to ensure integrity of the joint and hence avoid premature failure, even after a few years, and attendant costs in remedying the situation.

A rudimentary method of effecting the required scraping is the use of a simple hand tool consisting of a handle and a blade, which hand tool is used after firstly presenting a saddle fitting to the required zone of location on the pipe, then drawing round the perimeter of the fitting with a marker pen, then hatching the area bounded by the perimeter to identify the "patch" to be scraped. It will be appreciated that satisfactory scraping by this technique relies not only on the skill and determination of the operative, but also on accessibility, as a pipe requiring scraping is frequently already located in a trench.

Mechanical scraping devices have been proposed for temporary attachment to a pipe with a view to eliminating the vagaries of hand tool scraping, but a range of pipe diameters require a corresponding range of scraping devices with attendant acquisition, transport and storage costs, and the range of pipe diameters used by gas and water utilities is ever increasing.

Prior art document D1, EP 0427 453 A1, discloses a pipe scraping device suitable for scraping a prescribed area of the external periphery of a synthetic plastic pipe.

### Object of the Invention

A basic object of the present invention is the provision of a pipe scraping device.

### Summary of a First Aspect of the Invention

According to a first aspect of the invention, there is provided a pipe scraping device as defined in claim 1.

### Advantages of the Invention

The invention provides an apparatus whereby a pipe scraping device can be used for a range of pipe diameters, the skill required for hand tool scraping is eliminated, and scraping to correct depth over the entire prescribed "patch" area can be ensured.

### Brief Description of the Drawings

The invention will now be described in greater detail by way of example with reference to the accompanying drawings, in which:

The embodiments described in Figures 1, 2 and 3 do not form part of the invention but represent a background art that is useful for understanding the invention.
Figure 1 is a perspective view of a first embodiment of pipe scraping device in accordance with the second aspect of the invention, for effecting the method of the first aspect of the invention, on a range of smaller diameter pipes;
Figure 2 is a side elevation of the device of Figure 1;
Figure 3 is an end elevation of Figure 2; and
Figure 4 is a perspective view of a second embodiment of pipe scraping device in accordance with the second aspect of the invention, for effecting the method of the first aspect of the invention, on a range of larger diameter pipes.

### Detailed Description of the Drawings

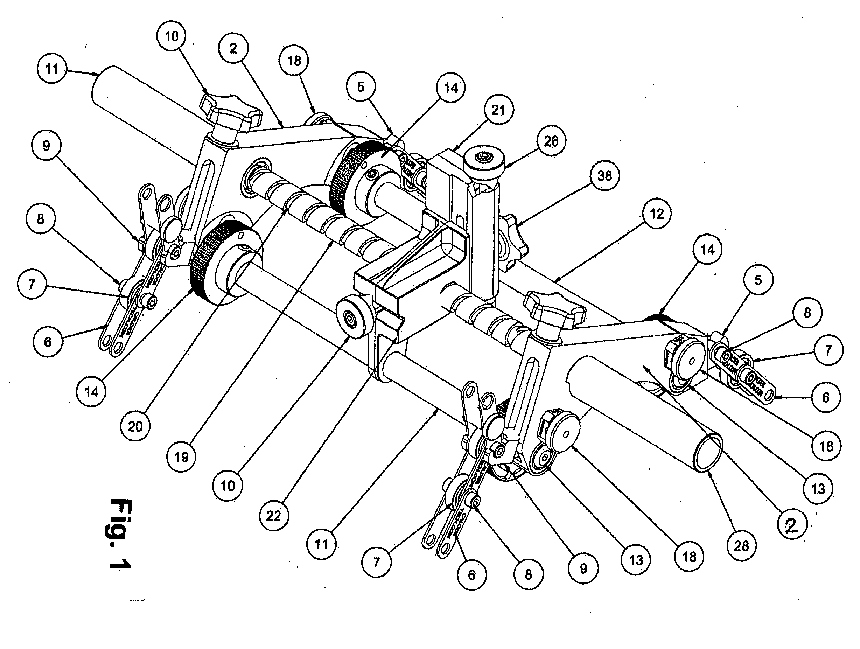

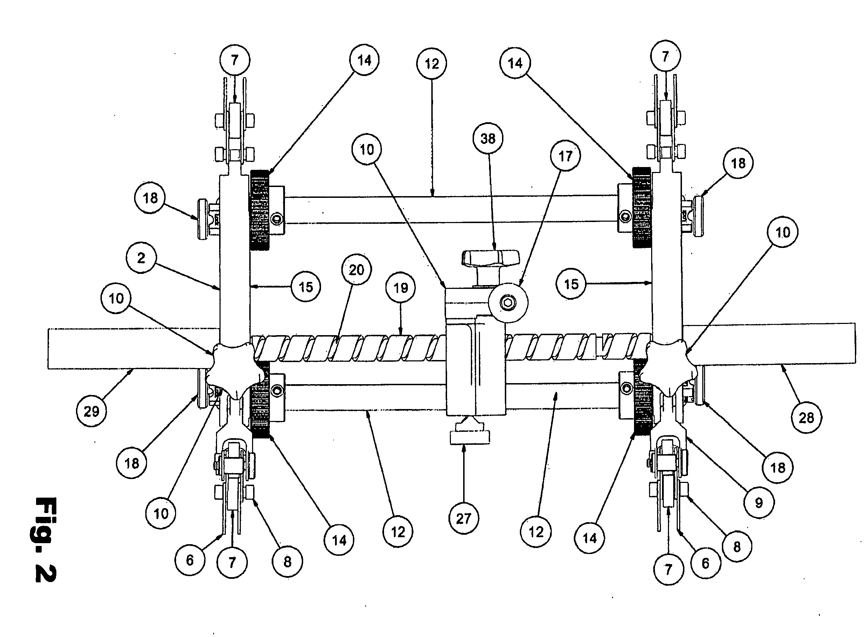

The embodiments described in Figures 1, 2 and 3 do not form part of the invention but represent a background art that is useful for understanding the invention.

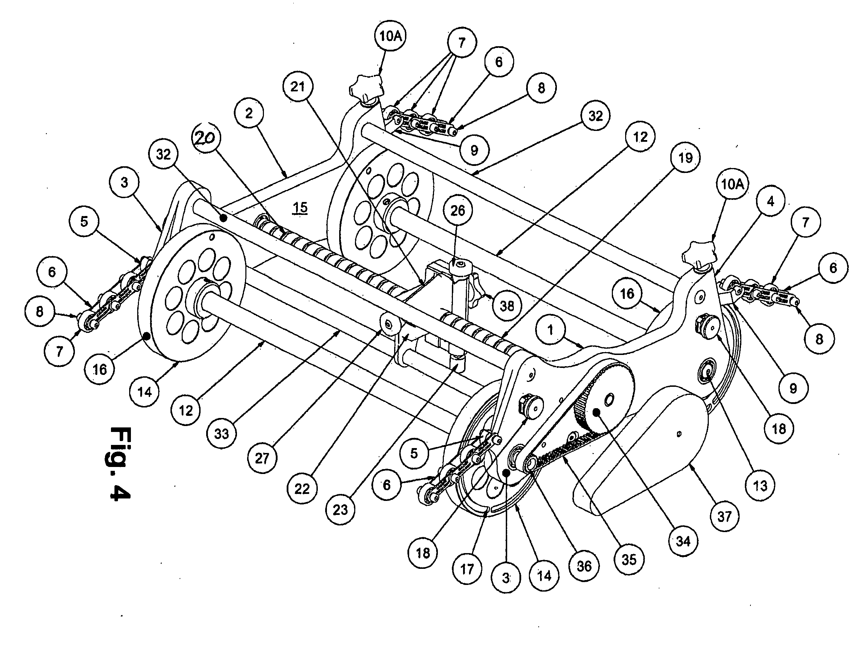

A pipe scraping device 1 comprises a pair of spaced-apart, parallel frame members 2 in the form of beams profiled from plate, each having a first end 3 and a second end 4. One end 5 of a link chain 6 is releasably attached to the first end 3 of each frame member 2, the links of the chains 6 carrying a plurality of rollers 7. The frame members 2 are spaced-apart by a distance slightly exceeding the maximum "length" of patch that the device 1 is designed to scrape, in the axial direction of the pipe involved. The other end 8 of each link chain 6 is releasably engageable in a fitting 9 at the second end 4 of each frame member 2, which fitting 9 is provided with screw device 10 for manual tightening of the chains 6. In the embodiment of Figures 1 to 3, final tightening, if required, is effected by an Allen Key engaging a socket 11 in each screw device 10. In the embodiment of Figure 4, final tightening is effected by a hand wheel 10A.

The frame members 2 are secured together in their spaced-apart relationship by a pair of parallel tie members 12. Ends of the tie members 12 are rotatably supported in bearings 13 mounted in the frame member 2, such that the tie members 12 constitute axles, on each of which are mounted, a pair of pipe engaging wheels 14, one adjacent the inside surface 15 of each frame member 2, and each wheel 14 is provided with a knurled contact surface 16 to aid gripping of the pipe.

In the embodiment of Figures 1 to 3, two of the wheels 14 are provided, in one side face, with an arcuate groove 17 engageable by a stroke length setting plunger operable by a thumbscrew 18, whilst in the embodiment of Figure 4, all four wheels 14 are grooved.

An indexing spindle 19, constituting a feed screw, and having an external helical groove 20, also extends between the frame members 2, parallel to the tie members 12.

Mounted on the indexing spindle 19 is a carriage 21 with an internal drive pin (not shown) engaging the groove 20, and with and extension piece 22 slidably engaging one of the tie members 12, in the embodiment of Figures 1 to 3.

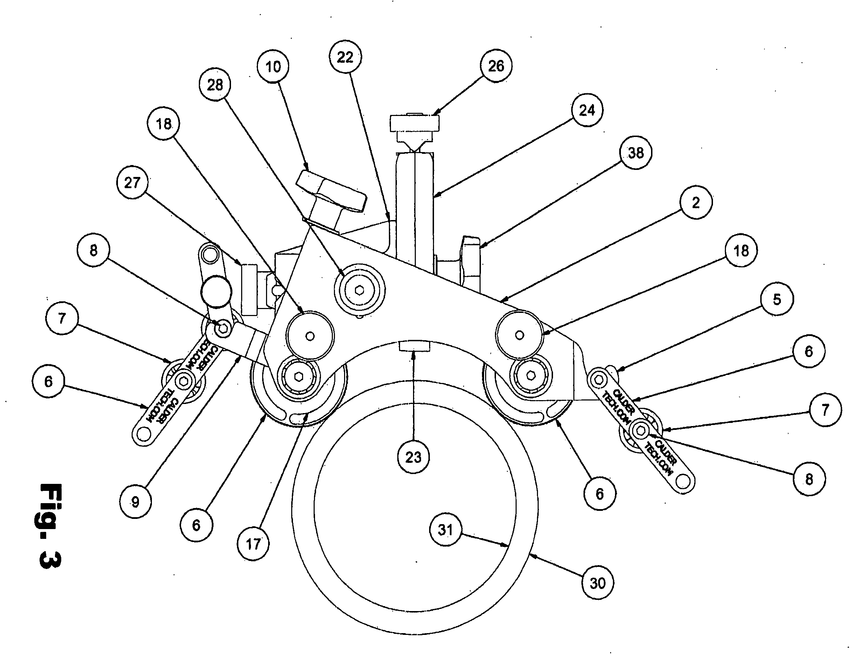

The carriage 21 also comprises a scraping with a tool 23 (Figure 3), a spring-loaded cartridge 24, a tip height adjustment nut 25, and tip lifting thumbscrews 26, a feed screw drive control thumb screw 27, and a top cartridge height adjustment hand wheel 38.

In the embodiment of Figures 1 to 3, indexing of the spindle 19 is effected by rotating a (right hand) handgrip 28 through 90° for which purpose the indexing spindle 19 is extended through each frame member 2, with the handgrip 28 drivably fixed to one extension, whilst a (left hand) handgrip 29 is rotatably mounted on its extension.

The method of use of the first embodiment of pipe scraping device 1 is indicated in Figure 3.

The carriage 21 needs to be positioned, by rotation of the handle 28 at the end of the indexing spindle 19 adjacent the handle 29, either before the pipe scraping device 1 has been presented to a pipe to be scraped or after the pipe scraping device 1 has been attached to the pipe to be scraped, by engaging the four knurled wheels 14 with arcuate external periphery 30 of a pipe 31 in the zone where a "patch", usually of rectangular profile, of dimensions suitable for the (industry-standard) saddle fitting that is required to be fusion-welded to the pipe 31, is required to be scraped. In the first embodiment of pipe scraping device 1, the ends 5 of each link chain 6 are permanently attached to the first end 3 of its frame member 2, the chains 6 are wrapped around the pipe 31, so that the other chain end 8 may be engaged in the fitting 9 and the screw device 10 tightened to secure the scraping device 1, for manual displacement, over a prescribed arc, by the operator pushing (or pulling) the pipe scraping device 1 in a first, scraping direction, over the arcuate external periphery 30 of the pipe 31, the arc being determined by the setting of the pins in the grooves 17, with the tool 23 engaging the periphery 30 of the pipe. Upon completion of the scraping arc, the operative displaces the scraping device 1 in the second, return direction. The operator then rotates the handgrip 28 through 90° to rotate the indexing spindle 19 through 90°, which in turn axially advances the carriage 21, ready for a repeat of arcuate movement in the first, scarping direction, with the carriage 21 progressively being indexed along the spindle 19 towards the handle 28.

The scraping, return, and indexing sequence is repeated, until a patch of required surface area for the saddle fitting required to be fused to the external periphery 30 of the pipe 31 has been completed.

In the embodiment of Figure 4, for a range of larger diameter pipes 31, the indexing spindle extensions to carry the handgrips 28 and 29 of the first embodiment are omitted, and the operator pushes, or pulls, on a pair of fixed tie rods 32 extending between the two frame members 2. In this embodiment, a third fixed tie rod 33 is provided, along which the extension piece 22 of the carriage 21 is slidable.

In this embodiment, the indexing spindle 19 extends through one frame member 2 and carries a larger diameter, 48 tooth driven toothed pulley 34 around which is wrapped an endless toothed belt 35, extending to a smaller diameter, 12 tooth drive toothed pulley 36 attached to one of the tie members or axles 12, with a one-way clutch, such that in the scraping stroke, the belt drive is ineffective, but during the return stroke is effective to automatically index the spindle 19 ready for the next scraping stroke. Also indicated at 37 is a drive guard.

After completion of the patch, the chain ends 8 are released from the fittings 9, so that the scraping device 1 may be removed from the pipe and fusion-welding of the saddle may be effected.

It will be appreciated that the lengths of the chains 6 enable a range of pipe diameters to be accommodated by the same pipe scraping device 1. However, for ranges of larger pipe diameters, the embodiment of Figure 4 is more suitable.

## Claims

1. A pipe scraping device (1) for scraping a prescribed area of the external periphery of a synthetic plastics pipe (31), comprising:
(i) a scraping tool (23);
(ii) means to releasably attach the scraping device (1) to a pipe (31) such that the device (1) is rotatable, over an arc, with respect to the pipe (31) to displace the scraping tool (23) arcuately about the pipe (31) in a scraping stroke;
(iii) means to index the scraping tool (23) with respect to the device (1), and in an axial direction along the pipe (31), **characterised in that** the pipe scraping device (1) further comprises two spaced-apart frame members (2) secured together by multiple, parallel non-rotatable tie rods (32), which also serve as hand grips for arcuate displacement of the scraping device (1) and **in that** it incorporates a drive transmission to index the scraping tool (23), constituted by an endless toothed belt (35) extending between a smaller diameter driven toothed pulley (36) connected to a pipe-engaging wheel (14), or a support spindle thereof, and a larger diameter, driven toothed pulley (34) carried by an indexing spindle (19), wherein the toothed pulley (36) is attached to one of the tie members (12), with a one-way clutch, such that in the scraping stroke, the belt drive is ineffective, but during the return stroke is effective to automatically index the spindle (19) ready for the next scraping stroke.

## Patentansprüche

1. Rohrkratzvorrichtung (1) zum Abschaben von einem vorgeschriebenen Bereich des Aussenumfangs aus einem Kunststoffrohr (31), umfassend:
(i) ein Schabwerkzeug (23);
(ii) ein Mittel zum lösbaren Befestigen der Rohrkratzvorrichtung (1) mit einem Rohr (31) derart, dass die Vorrichtung (1) drehbar ist, über einen Kreisbogen in Bezug auf das Rohr (31), um das Schabwerkzeug (23) zu verdrängen bogen um das Rohr (31) in einem Kratzen Schlaganfall;
(iii) ein Mittel zum Indizieren des Schabwerkzeuges (23) bezüglich der Vorrichtung (1) und in einer axialen Richtung entlang dem Rohr (31), **dadurch gekennzeichnet, dass** die Rohrkratzvorrichtung (1) weiter zwei beabstandete, parallele Rahmengliedern (2) umfasst, die durch mehrere parallele nicht drehbare Ankerstäbe (32) zusammen verbunden sind, die auch als Handgriffe für eine bogenförmige Verschiebung der Rohrkratzvorrichtung (1) dienen und dass die Rohrkratzvorrichtung (1) eine Antriebsübertragung zum Indizieren des Schabwerkzeuges (23) umfasst , die durch einen endlosen Zahnriemen (35) gebildet ist, die sich zwischen einem kleineren Durchmesser angetriebenen Zahnriemenscheibe (36) mit einem Rohr in Eingriff kommenden Rad (14) verbunden ist, oder eine Stützspindel davon, und einem grösseren Durchmesser aufweist, angetriebenen Zahnscheibe (34) durch eine Schaltspindel (19) durchgeführt, wobei Zahnriemenscheibe (36) zu einem von den Zugliedern (12) verbunden ist, mit einem Einbahngriff, so dass in dem Kratzen Schlaganfall, der Riementrieb unwirksam ist, aber in dem Rückschlaganfall wirksam ist, um eine Schalttspindel (19) automatisch zu indizieren, fertig für folgende Kratzen Schlaganfall.

## Revendications

1. Un appareil de grattage pour tube (1) pour gratter une zone prescrite de la périphérie externe d'un tuyau en plastique synthétique (31), comprenant :
(i) un outil de grattage (23) ;
(ii) un moyen pour attacher l'appareil de grattage (1) de façon amovible à un tuyau (31) de sorte que l'appareil (1) soit rotatif, le long d'un arc, par rapport au tuyau (31) pour déplacer l'outil de grattage (23) de façon curvilinéaire autour du tuyau (31) suivant une course de grattage ;
(iii) un moyen pour indexer l'outil de grattage (23) par rapport à l'appareil (1) et selon une direction axiale le long du tuyau (31), **caractérisé en ce que** l'appareil de grattage pour tube (1) comprend en outre deux éléments d'ossature (2) sécurisés l'un à l'autre par de multiples barres d'accouplement parallèles et non-rotatives (32), qui servent également de poignées pour le déplacement curvilinéaire de l'appareil de grattage (1) et **en ce qu'**il incorpore une transmission d'entraînement pour indexer l'outil de grattage (23), constituée par une courroie crantée sans fin (35) qui s'étend entre une poulie crantée entraînée de diamètre inférieur (36) connectée avec une roue à engagement avec le tuyau (14), ou son arbre de soutien, et une poulie crantée entraînée de diamètre supérieur (34) maintenue par un arbre à indexage (19), dans lequel la poulie crantée (36) est attachée à l'une des barres d'accouplement (12) avec un embrayage à sens unique, de sorte que l'entraînement par courroie soit inefficace pendant la course de grattage, mais soit efficace pendant la course de retour pour indexer automatiquement l'arbre (19) prêt pour la course de grattage suivante.
